# DEMANDE DE BREVET EUROPEEN

(11) **EP 3 499 193 A1**
(43) Date de publication de la demande: **19.06.2019**
(21) Numéro de dépôt: 18210366.3
(22) Date de dépôt: 05.12.2018
(51) Int. Cl.: G01D 11/24, G01L 19/14, G01K 1/08

(54) **DISPOSITIF DE MESURE D'UN PARAMETRE PHYSIQUE D'UN FLUIDE D'UN CIRCUIT DE VEHICULE AUTOMOBILE**

(30) Priorité: 14.12.2017 FR 1701304
(71) Demandeur: AKWEL, 01410 Champfromier (FR)
(72) Inventeur: SPANEVELLO, MARCO MARTINO, 84210 VENASQUE (FR)

(57) **Abrégé**

Le dispositif (10) comprend un corps (14) de boîtier comprenant un corps (16) de base munie d'une chambre (28) de mesure du fluide et un corps (18) de connecteur électrique, assemblés pour délimiter ensemble un logement intérieur (20) au corps de boîtier (14), un élément (12) de détection, une pièce intermédiaire (60) de positionnement de l'élément de détection (12) comprenant un espace transversal (62) de réception de l'élément de détection (12) et un joint d'environnement (80) d'étanchéité du logement intérieur (20) vis-à-vis de l'environnement extérieur. Selon l'invention, la pièce (60) et le connecteur (18) sont conformés pour coopérer par emboîtement afin d'assurer un positionnement relatif de la pièce (60) par rapport au corps de connecteur (18) et dans une position emboîtée, la pièce (60) et le connecteur (18) délimitent ensemble une gorge périphérique extérieure (82) destinée à recevoir le joint d'environnement (80).

## Description

La présente invention concerne un dispositif de mesure d'un paramètre physique d'un fluide, tel qu'un fluide circulant dans un circuit d'un véhicule automobile. Elle s'applique plus particulièrement mais non exclusivement à la mesure de la pression ou de la température du fluide circulant dans de tels circuits ou encore à la mesure de l'humidité résidant dans ces circuits.

Un tel dispositif de mesure est particulièrement adapté pour être installé dans différents circuits du véhicule automobile tels que des circuits d'assistance freinage, des circuits de vide pour le pilotage des auxiliaires, des circuits de carburant, des circuits de vapeurs de carburant et/ou vapeurs d'huile, des circuits de refroidissement, des circuits de fluide de dépollution (solution d'urée, additifs pour filtre à particules), etc.

En général, comme cela est connu notamment du document US 2016/0252418, le dispositif comprend un corps de boîtier comprenant une première partie formant base et une deuxième partie formant connecteur. Les deux parties sont assemblées entre elles pour former un volume étanche à l'intérieur duquel s'étend un élément de détection.

Afin d'assurer l'étanchéité à l'environnement extérieur du dispositif (essentiellement poussière et moisissure), le dispositif comprend encore un joint d'étanchéité destiné à s'étendre entre le corps de connecteur et le corps de base. En outre, afin de faciliter son indexage à l'intérieur du volume intérieur du corps de boîtier, l'élément de détection a une forme hexagonale tout comme la base et le connecteur. Le dispositif comprend encore une bague de support à clip fixée par soudage à l'intérieur du corps de base délimitant un espace de réception hexagonal de l'élément de détection et un clip de maintien de l'élément dans cet espace.

L'inconvénient du dispositif de l'art antérieur est qu'il requiert, pour réaliser l'indexage, l'utilisation d'une forme spécifique hexagonale des différents éléments la composant, y compris de l'élément de détection. Ceci participe à la complexité de ce dispositif et bien entendu aux coûts importants liés à cette disposition très particulière. Par ailleurs, comme l'étanchéité à l'environnement est réalisée par compression du joint de forme hexagonale entre la base et le connecteur, ceci impose de prévoir un assemblage de la base et du connecteur permettant une telle compression et donc des contraintes importantes au niveau de la chaîne de côtes.

L'invention a notamment pour objet de fournir un dispositif de mesure d'un paramètre physique d'un fluide de véhicule automobile qui soit simple de conception et de fabrication, robuste et qui présente une excellente fiabilité en termes d'étanchéité.

A cet effet, l'invention a pour objet un dispositif de mesure d'un paramètre physique d'un fluide, en particulier un fluide d'un circuit d'un véhicule automobile, du type comprenant :
- un corps de boîtier comprenant un corps de base muni d'une chambre de mesure du fluide et un corps de connecteur pour le raccordement électrique du dispositif avec un circuit électrique externe, les corps de connecteur et de base étant assemblés pour délimiter ensemble un logement intérieur au corps de boîtier,
- un élément de détection du paramètre physique délimitant une première face communiquant avec la chambre de mesure et une deuxième face de connexion électrique avec le corps de connecteur,
- une pièce intermédiaire de positionnement de l'élément de détection comprenant un espace transversal de réception de l'élément de détection, et
- un joint d'environnement agencé pour assurer une étanchéité du logement intérieur vis-à-vis de l'environnement extérieur,
**caractérisé en ce que** la pièce intermédiaire et le corps de connecteur sont conformés pour coopérer par emboîtement afin d'assurer un positionnement relatif de la pièce par rapport au corps de connecteur **et en ce que** dans une position emboîtée, la pièce et le corps délimitent ensemble une gorge périphérique extérieure destinée à recevoir le joint d'environnement.

Grâce à la géométrie particulière de la pièce intermédiaire et du connecteur, le positionnement relatif de l'élément de détection avec le corps de connecteur est simplifié. En outre, la formation de la gorge périphérique de logement du joint d'environnement lors de l'assemblage du connecteur et de la pièce permet de créer une étanchéité optimale et simple sans recourir à des opérations ultérieures d'étanchéification par dépôt de résine ou autres matières. Comme la gorge est formée à l'extérieur de l'assemblage du connecteur et de la pièce dans une zone de jonction des deux composants, ceci permet d'assurer une étanchéité dans une zone particulièrement sensible aux intrusions d'humidité et de poussières.

De préférence, la gorge périphérique extérieure présente une section transversale en forme de U ouvert radialement vers l'extérieur. Par exemple, la gorge périphérique extérieure est fermée par le corps de base de telle sorte que le joint d'environnement est comprimé radialement à l'intérieur de la gorge, en position d'assemblage du dispositif.

Dans un mode de réalisation préféré de l'invention, le corps de connecteur et la pièce intermédiaire comprennent des organes d'emboîtement de forme complémentaire formés, sur des faces en regard de la pièce intermédiaire et du corps de connecteur, par une succession de parties en saillie et en creux décalés par rapport à ceux de la face placée en regard.

De préférence, les organes d'emboîtement de la pièce intermédiaire sont disposés autour de l'espace de réception de l'élément de détection.

Dans l'exemple décrit, le corps de connecteur comprend une paroi frontale d'obturation du corps de base et une jupe latérale périphérique s'étendant depuis une face interne de la paroi frontale en formant un épaulement intérieur avec la paroi, la jupe et l'épaulement délimitant respectivement un fond et une paroi latérale de la gorge.

Dans le mode de réalisation préféré de l'invention, la pièce intermédiaire a une forme générale de plaque munie d'un rebord périphérique surélevé par rapport au plan de la plaque, ce bord périphérique délimite une portion centrale à l'intérieur de laquelle s'étend l'espace transversal de réception.

De préférence, dans la position de montage, le rebord périphérique surélevé de la pièce intermédiaire vient en appui contre l'épaulement intérieur par l'intermédiaire du joint.

Dans un mode de réalisation préféré de l'invention, la jupe latérale est dimensionnée pour s'étendre au moins partiellement à l'intérieur du rebord périphérique de la pièce intermédiaire.

De préférence, l'élément de détection comprend un support en forme de plaquette, l'épaisseur de la portion centrale de la pièce intermédiaire correspond sensiblement à l'épaisseur de la plaquette.

Dans un mode de réalisation préféré de l'invention, le corps de connecteur comprend un embout de raccordement électrique s'étendant axialement en saillie.

De préférence, la pièce intermédiaire est montée en force à l'intérieur du corps de base ou est venue de matière avec le corps de base.

De préférence, la pièce intermédiaire comprend sur une paroi externe périphérique de son bord surélevé au moins une nervure apte à coopérer par friction avec une paroi interne latérale du corps de base pour créer le montage en force à l'intérieur du corps de base.

Dans un mode de réalisation préféré de l'invention, le corps de base est muni d'une paroi latérale périphérique venant retenir le corps de connecteur par sertissage d'un bord d'extrémité de la paroi latérale sur le pourtour extérieur du corps de connecteur.

Dans un mode de réalisation préféré de l'invention, l'élément de détection a une forme générale rectangulaire, carrée ou cylindrique.

De préférence, la pièce intermédiaire est réalisée dans un matériau thermoplastique.

Dans un mode de réalisation préféré de l'invention, la pièce intermédiaire comprend en outre un prolongement axial en forme de doigt de gant pour loger une sonde de température. De préférence, le doigt de gant s'étend en bordure de l'espace intérieur de réception de l'élément de détection.

De préférence le dispositif comprend au moins un autre joint d'étanchéité au fluide circulant dans la chambre de mesure, le corps de base comprenant un fond muni d'une ouverture de communication avec la chambre, dans lequel le fond présente un emplacement de réception du joint d'étanchéité au fluide délimité par un gradin.

D'autres caractéristiques et avantages de l'invention apparaîtront à la lumière de la description qui suit, faite en référence aux dessins annexés dans lesquels :
- la figure 1 représente une vue en perspective d'un dispositif de mesure selon l'invention ;
- la figure 2 est une vue éclatée du dispositif de mesure de la figure 1 ;
- la figure 3 est une vue en coupe du dispositif de mesure de la figure 1 selon la ligne III-III de la figure 1 ;
- la figure 4 est une vue en perspective d'une pièce intermédiaire du dispositif de mesure des figures 1 à 3 ;
- la figure 5 représente une vue en perspective d'une partie du corps de boîtier du dispositif de mesure de la figure 1 ;
- la figure 6 est une vue en perspective de l'ensemble comprenant la pièce intermédiaire de la figure 5 et un élément de détection du paramètre physique pour la mesure du paramètre par le dispositif de la figure 1 ;
- la figure 7 représente une vue en perspective de l'ensemble représenté par la figure 6 monté à l'intérieur de la partie de corps de boîtier illustré en figure 5 ;
- la figure 8 représente une vue en perspective de dessous d'une autre partie du corps de boîtier du dispositif de mesure de la figure 1 ;
- la figure 9 représente une vue de dessous en perspective du corps de boîtier monté avec la pièce intermédiaire représentée sur la figure 4 ;
- la figure 10 représente un autre point de vue du corps de boîtier monté avec la pièce intermédiaire déjà représenté en figure 9 ;
- la figure 11 est une vue en perspective de la pièce intermédiaire de la figure 4 selon une variante de réalisation de l'invention.

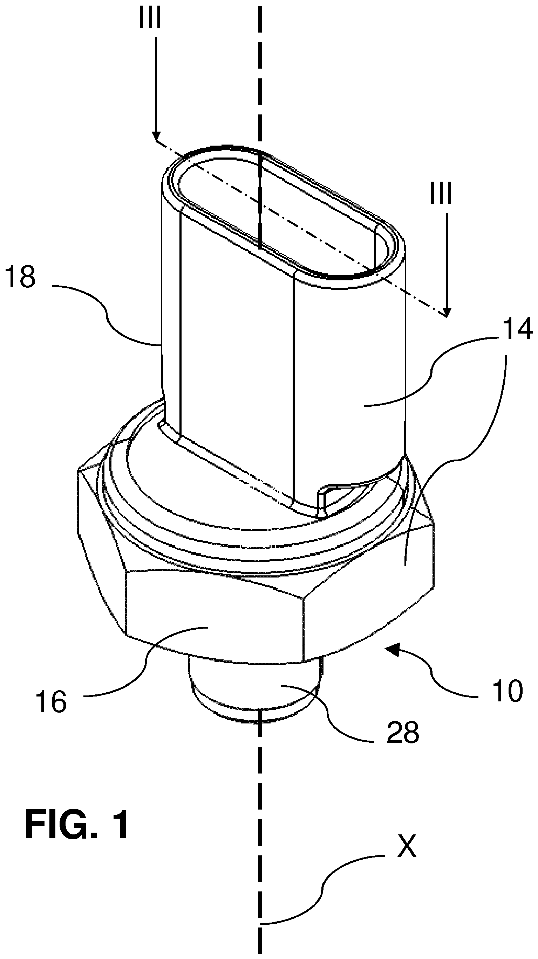

On a représenté de façon schématique sur **la** **figure 1** un dispositif de mesure d'un paramètre physique d'un fluide. Ce dispositif est désigné par la suite par la référence générale 10. Ce dispositif est destiné plus particulièrement mais non exclusivement à la mesure d'un paramètre physique d'un fluide d'un circuit de véhicule automobile. De préférence et dans la suite de la description, le dispositif de mesure 10 est destiné à mesurer au moins un paramètre de pression du fluide et de préférence en plus un paramètre de température.

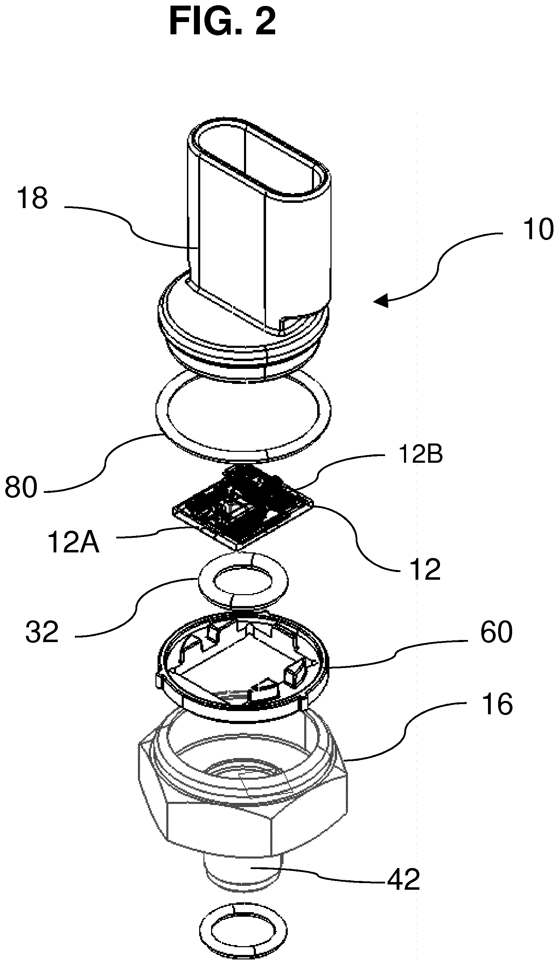

A cet effet, le dispositif 10 comprend un élément 12 de détection du paramètre physique. Cet élément 12 comprend un support, par exemple en forme de plaquette de forme générale rectangulaire telle que représentée sur **la** **figure 2****.** Cet élément 12 délimite une première face de détection 12A comprenant une surface sensible destinée à être en contact avec le fluide et une deuxième face 12B de connexion électrique pour son raccordement électrique à un circuit électrique externe (non représenté). En outre, l'élément 12 de détection peut comporter un capteur de pression et également un capteur de température.

Dans cet exemple, l'élément 12 comprend par ailleurs sur la face de connexion électrique 12B, un composant électronique 11, par exemple un composant de type ASIC (sigle anglais pour « Application-Specific Integrated Circuit » ou littéralement « circuit intégré propre à une application »). Dans ce cas, la plaquette de l'élément 12 peut être réalisée par exemple en céramique, constituée par exemple essentiellement d'alumine, et le composant 11 peut être rapporté par sérigraphie sur la plaquette ou encore par soudage ou brasage ou encore par une combinaison de ces techniques. Cette plaquette peut dans ce cas incorporer une membrane déformable associée à un matériau piézo-résistif agencé selon une architecture en pont de Wheatstone. De façon connue en soi, une déformation de la membrane provoque une variation de résistance et donc une variation de tension. Cette variation de tension est liée à la pression exercée sur la membrane par une loi de corrélation prédéfinie.

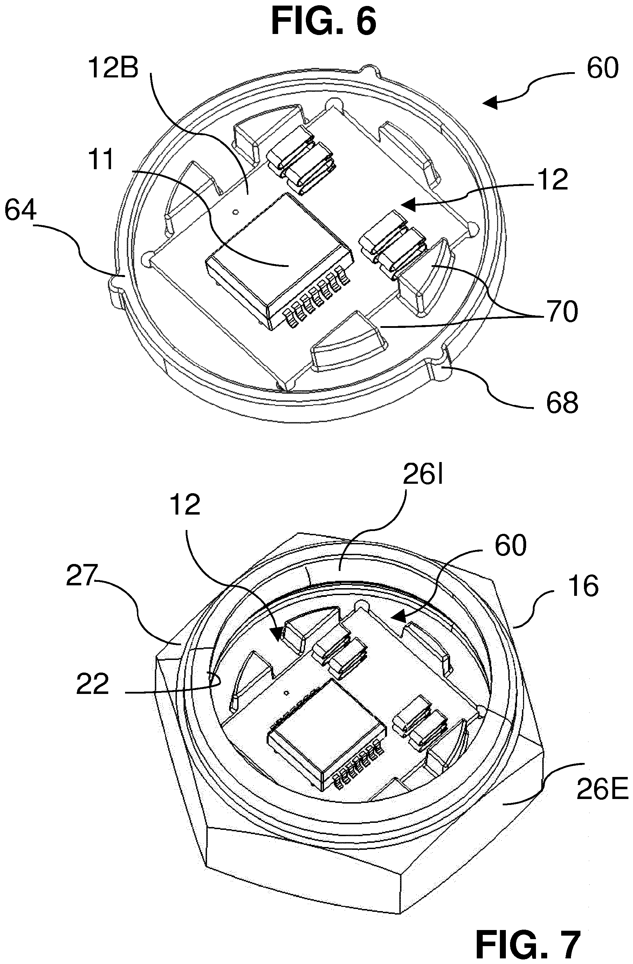

En variante, l'élément 12 peut comporter une puce de microsystème électromécanique (MEMS) par exemple munie d'une membrane sensible et d'un circuit de détection de contrainte permettant de mesurer l'état de compression de la membrane qui est proportionnel à la pression de fluide (**figures 6 et 7**). Dans ce cas, la plaquette peut être également de façon classique une carte de circuit imprimée connue en soi désignée couramment par le signe anglophone PCB pour « printed circuit board ».

Dans une variante non illustrée, l'élément de détection 12 peut éventuellement comporter un profil à détrompage pour garantir une connectivité électrique correcte de sa face de connexion électrique. Par exemple, l'élément de détection peut avoir une forme générale carrée ou rectangulaire et présenter un coin cassé pour le détrompage ou encore être de forme cylindrique et présenter des reliefs ou des marques de repérage.

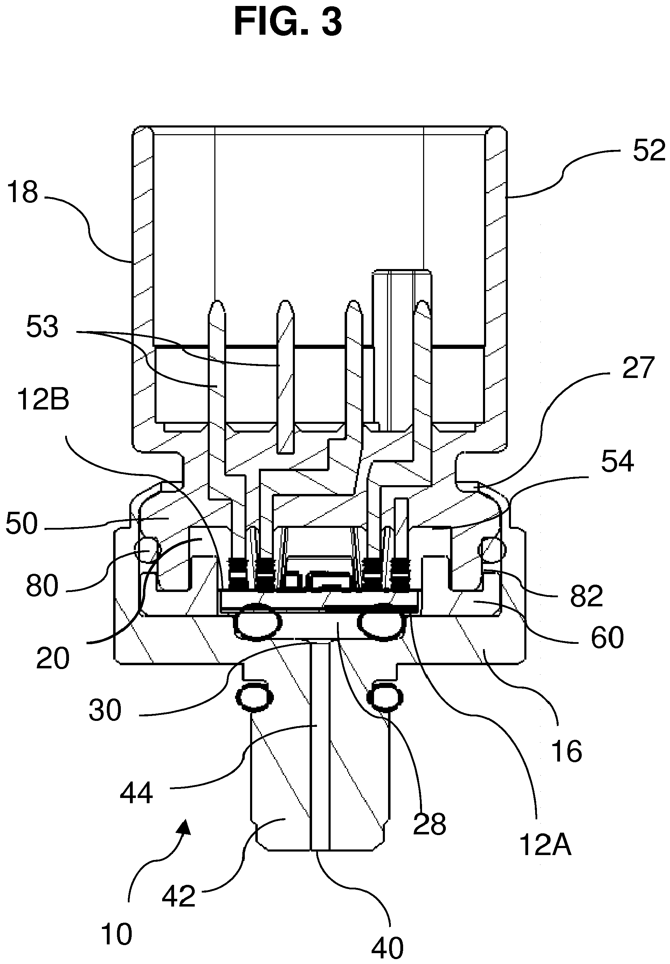

Comme cela est représenté sur **la** **figure 1****,** le dispositif 10 comprend encore un corps 14 de boîtier. Ce corps 14 comprend une partie inférieure 16, désignée ci-après par corps de base ou base et une partie supérieure 18 désignée ci-après par corps de connecteur ou connecteur. Les corps de connecteur 18 et de base 16 sont assemblés pour délimiter ensemble un volume intérieur du corps de boîtier 14 formant un logement interne 20 pour l'élément de détection 12 visible sur **la** **figure 3****.**

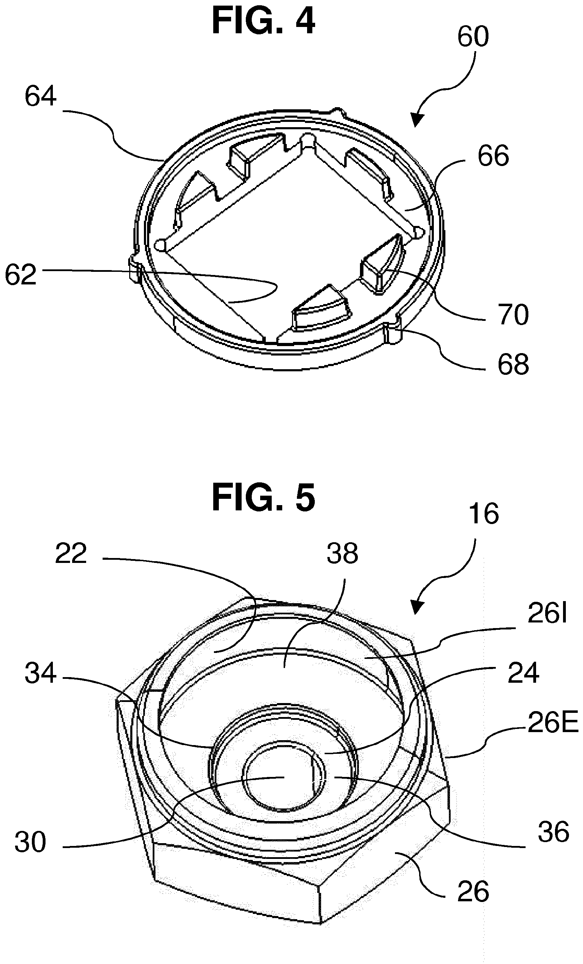

Comme cela est illustré sur **la** **figure 5****,** la base 16 comprend de préférence un corps principalement de forme générale de révolution autour d'un axe principal X du dispositif 10 ou de forme symétrique. La base 16 présente dans cet exemple une cavité 22 ouverte délimitée par un fond 24 et une paroi périphérique 26. La cavité 22 a dans cet exemple une forme générale de révolution autour de l'axe X. La paroi périphérique 26 présente dans cet exemple une surface extérieure 26E ayant un profil hexagonal et une surface intérieure 261 ayant un profil circulaire. Bien entendu, cela n'est pas limitatif et d'autres profils peuvent convenir à la réalisation de l'invention.

La base 16 est munie en outre de préférence d'une chambre de mesure de fluide 28 visible sur **la** **figure 3****.** Cette chambre 28 est destinée à communiquer d'une part avec une zone de passage de fluide dans le circuit de circulation de fluide (non représentée) et d'autre part avec le logement intérieur 20 du corps de boîtier 14 à l'intérieur duquel s'étend l'élément de détection 12.

Ainsi, comme cela est représenté en coupe sur **la** **figure 5****,** le fond 24 de la cavité 22 de la base 16 comprend un orifice 30 pour communiquer avec la chambre de mesure 28. Ainsi, la surface sensible de l'élément de détection 12 peut être en communication avec la chambre de mesure 28 tout en étant logée à l'intérieur du corps de boîtier 14 (**figure 3**).

Afin d'empêcher la pénétration du fluide dans le logement intérieur 20 du corps de boîtier 14, le dispositif 10 comprend encore un joint d'étanchéité 32 au fluide circulant dans la chambre de mesure 28.

A cet effet, comme cela est visible sur la vue en coupe de **la** **figure 3** ainsi que sur **la** **figure 5****,** le fond 24 de la cavité 22 présente un gradin 34 afin de délimiter une zone centrale 36 et une zone périphérique 38 surélevée. L'orifice de communication 30 s'étend de préférence à l'intérieur de la zone centrale 36. La zone centrale 36 et le gradin 34 délimitent un emplacement pour le joint d'étanchéité au fluide 32. Le joint 32 a dans cet exemple une forme générale torique et le fond 24 est de forme de révolution autour de l'axe principal X du dispositif 10 et la zone centrale 36 est dimensionnée pour recevoir le joint 32.

Dans cet exemple, la chambre de mesure 28 est formée par un embout 42 d'extension axiale et traversé par au moins un perçage 44 débouchant à une première extrémité par l'orifice 30 à l'intérieur de la cavité 22 et à une deuxième extrémité par un orifice 40 débouchant à l'extérieur du dispositif 10. Cet embout 42 peut éventuellement présenter sur sa surface extérieure un filetage pour permettre une utilisation vissée du dispositif 10 et, comme cela est illustré sur **la** **figure 3****,** un logement de réception d'un joint torique d'étanchéité extérieur au dispositif 10.

Eventuellement, lorsque cet embout est réalisé en matière plastique, par exemple par moulage par injection, alors le logement pour le joint torique formant par exemple une gorge dans l'embout, peut être réalisé de façon particulièrement avantageuse, sans bavure de moulage dans la gorge, selon le procédé qui a fait l'objet d'un dépôt de brevet en France par la demanderesse sous le N° 17.55615.

La base 16 est par exemple réalisée dans un matériau métallique et peut être réalisée par simple usinage du fait de sa forme générale de révolution.

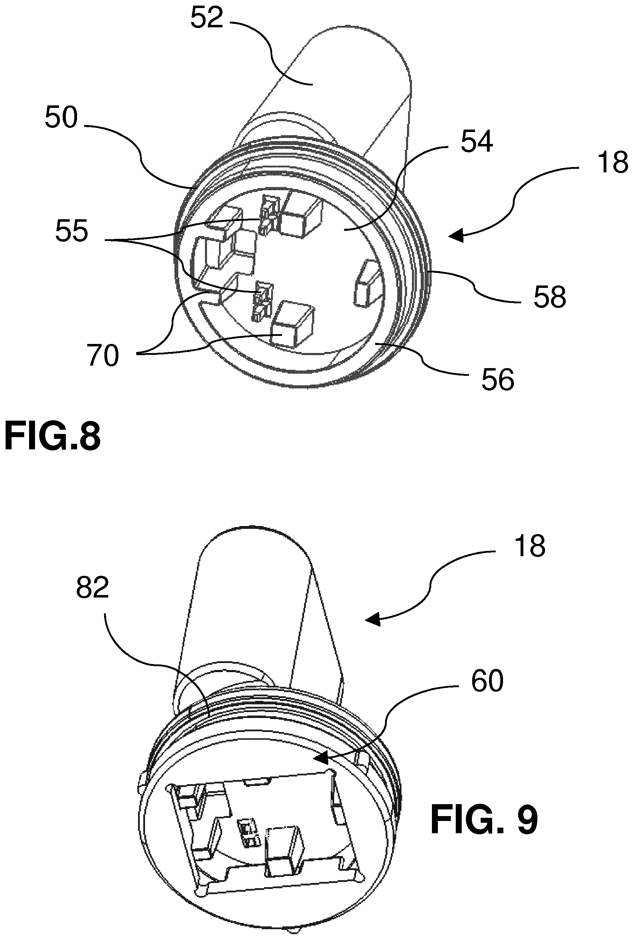

On a représenté en détail le connecteur 18 sur **les** **figures 3** **et** **8****.** Le connecteur 18 est conformé pour permettre le raccordement électrique du dispositif 10 avec un circuit électrique externe tel que par exemple une unité de contrôle électrique du véhicule automobile (non représentée).

Le connecteur 18 comprend une partie principale 50. La partie principale 50 a de préférence une forme générale sensiblement de révolution. Cette partie principale 50 forme dans l'exemple décrit un couvercle pour obturer la cavité 22 de la base 16 et délimiter ainsi le logement intérieur 20 du dispositif 10. Dans cet exemple, le volume intérieur du corps de boîtier 14 a globalement une forme générale de révolution autour de l'axe X.

De préférence, le connecteur 18 comprend encore un embout 52 de raccordement électrique avec un circuit externe s'étendant axialement en saillie à partir de la partie principale 50. A cet effet et comme cela est illustré sur **la** **figure 3****,** le connecteur 18 comprend également une pluralité de broches de connexion électrique 53 s'étendant à l'intérieur de l'embout 52 de façon à former une prise.

En outre, comme cela est illustré sur **la** **figure 8****,** le connecteur 18 comprend une paroi frontale 54 d'obturation de la base 16 qui est destinée à venir en regard de la cavité 22 formée par la base 16. Cette paroi frontale 54 vient en regard de la base 16 de sorte que lorsque la base 16 et le connecteur 18 sont réunis, la paroi frontale 54 vient fermer le volume intérieur du corps de boîtier 14 pour délimiter le logement intérieur 20.

On voit notamment sur **la** **figure 3** **et sur la** **figure 6** que la deuxième face de connexion électrique 12B de l'élément de détection 12 est destinée à venir en contact avec des éléments électriques 55 du connecteur 18 en lien avec les broches 53 décrites ci-dessus. Bien entendu, cette configuration n'est en rien limitative et d'autres configurations pourraient convenir à la réalisation de l'invention.

De préférence, le connecteur 18 comprend une jupe latérale périphérique intérieure 56 formant avec la paroi frontale 54 d'obturation un épaulement intérieur 58. En position de montage, la jupe 56 s'étend sensiblement axialement en direction de la base 16 du dispositif 10 à l'intérieur de la cavité 22 de la base 16.

La face interne de la paroi frontale 54 peut être plane ou présenter localement des reliefs. Par exemple, comme cela est illustré notamment sur **la** **figure 3****,** la face interne de la paroi frontale 54 présente une surépaisseur sur son pourtour qui forme dans le cas présent l'épaulement 58.

Afin d'assembler la base 16 et le connecteur 18, la paroi périphérique 26 de la base 16 est de préférence par ailleurs munie d'un bord d'extrémité 27 venant retenir le connecteur 18 par sertissage du bord d'extrémité sur le pourtour extérieur du connecteur 18. A cet effet, la paroi périphérique 26 comprend une portion amincie formant le bord d'extrémité 27 destiné à être serti.

Conformément à l'invention, afin de positionner l'élément de détection 12 à l'intérieur du logement interne 20, le dispositif 10 comprend encore une pièce intermédiaire 60 de positionnement de l'élément de détection 12 illustré en détail sur **la** **figure 4****.** Cette pièce intermédiaire 60 comprend notamment un espace transversal 62 de réception de l'élément de détection 12 de façon à former l'assemblage illustré sur **la** **figure 6****.** Cette pièce 60 est destinée de préférence à être logée à l'intérieur de la cavité 22 de la base 16 comme cela est représenté sur **la** **figure 7****.**

Par exemple, l'espace transversal 62 a une forme générale complémentaire de celle de l'élément de détection 12, par exemple dans le cas présent, l'espace transversal 62 a une forme générale rectangulaire. Bien entendu, d'autres formes d'élément de détection sont adaptées pour la réalisation de l'invention et par conséquent d'autres formes d'espace transversal de réception. En particulier, dans le cas où l'élément de détection comprend un profil à détrompage, l'espace transversal 62 comprend un profil intérieur complémentaire.

Dans l'exemple décrit, la pièce intermédiaire 60 a une forme générale de plaque munie d'un rebord périphérique surélevé 64 par rapport au plan de la plaque. Ce rebord périphérique 64 délimite une portion centrale 66 à l'intérieur de laquelle s'étend l'espace transversal de réception 62.

De préférence, l'épaisseur de la portion centrale 66 de la pièce intermédiaire 60 correspond sensiblement à l'épaisseur de la plaquette de circuit imprimé de l'élément 12.

Conformément à l'invention, afin d'assurer un positionnement relatif précis de l'élément de détection 12 avec le connecteur 18, la pièce intermédiaire 60 et le connecteur 18 sont conformés pour coopérer par emboîtement.

Par exemple, comme cela est illustré sur **les** **figures 4****,** **8 et 9****,** le connecteur 18 et la pièce intermédiaire 60 comprennent des organes d'emboîtement 70 de forme complémentaire formés, sur des faces en regard de la pièce intermédiaire 60 et du connecteur 18, par une succession de parties en saillie et en creux décalés par rapport à ceux de la face placée en regard.

Bien entendu, en variante, l'emboîtement de la pièce intermédiaire 60 et du connecteur 18 peut être réalisé de différentes façons par exemple par des moyens de clipsage, d'encliquetage ou autres.

Ainsi, de préférence, la pièce intermédiaire 60 et le connecteur 18 présentent des formes complémentaires coopérant mécaniquement pour assurer un assemblage libérable de la pièce intermédiaire 60 et du connecteur 18.

De préférence et comme cela est illustré sur **la** **figure 4****,** les organes d'emboîtement 70 de la pièce intermédiaire 60 sont disposés autour de l'espace de réception 62. Par ailleurs, de préférence, les organes d'emboîtement 70 du connecteur 18 sont disposés à l'intérieur d'un espace délimité par la jupe latérale 56 (**figure 8**). En outre, sur **la** **figure 8****,** on voit que certains organes d'emboîtement 70 sont formés d'un seul tenant avec la jupe latérale 56.

Afin d'assurer une étanchéité du dispositif 10 à l'environnement (poussière et surtout humidité), le dispositif 10 comprend encore un joint d'étanchéité 80 dit d'environnement agencé de telle sorte qu'il permet d'assurer une étanchéité du volume intérieur du corps de boîtier 14 vis-à-vis de l'environnement extérieur. Ce joint d'étanchéité 80 a dans cet exemple une forme générale torique. Le joint d'étanchéité 80 peut être fabriqué à partir de tout matériau élastomère tel que l'élastomère thermoplastique, le caoutchouc naturel ou synthétique.

Conformément à l'invention, une fois emboîtés, la pièce 60 et le connecteur 18 délimitent ensemble une gorge périphérique extérieure 82 destinée à recevoir le joint d'étanchéité à l'environnement 80 comme cela est visible sur **les** **figures 3** **et** **9****.**

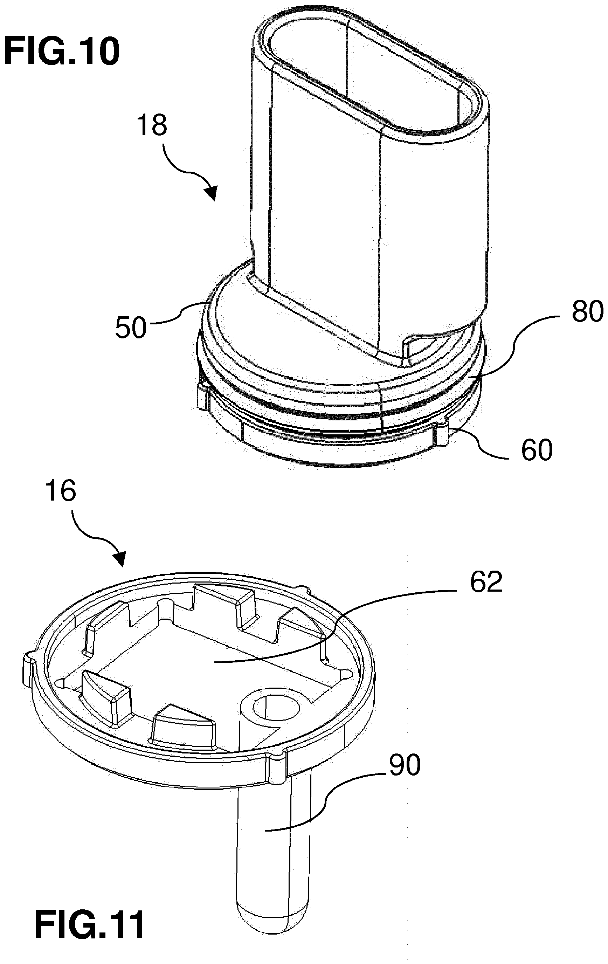

Comme cela est illustré **en** **figure 10****,** de préférence, la gorge périphérique 82 présente, en section transversale, une forme de U dont l'ouverture est tournée radialement vers l'extérieur du dispositif 10. La gorge 82 est de préférence dimensionnée de façon à ce que dans une position de montage du dispositif, le joint torique d'environnement 80 soit comprimé radialement à l'intérieur de la gorge 82 entre la paroi intérieure de la base 16 et la jupe latérale périphérique.

Comme cela est illustré sur **les figures,** la gorge 82 est délimitée par un fond formée par la jupe latérale 56 et des parois latérales formées par d'une part l'épaulement 58 et d'autre par une face d'extrémité du rebord de la pièce intermédiaire 60. Lorsque le dispositif 10 est monté comme sur **la** **figure 3****,** la paroi d'obturation s'étend en travers du dispositif 10 tandis que la jupe latérale 56 est, sur sa périphérie extérieure d'extrémité appuyée contre la face intérieure du rebord de la pièce intermédiaire 60. La jupe latérale 56 présente de préférence par ailleurs une extrémité libre pourvue d'une face d'extrémité destinée à venir en butée contre le fond de la pièce intermédiaire 60.

De préférence et comme cela est illustré, la gorge 82 est annulaire afin de réaliser une étanchéité par un joint de forme générale torique. Lorsque la jupe latérale 56 est en butée contre le fond de la pièce intermédiaire 60, l'épaulement 58 et la face d'extrémité du rebord de la pièce intermédiaire 60 sont distants axialement afin de définir une largeur de la gorge 82 selon la direction axiale suffisante pour loger le joint 80.

Afin de réaliser cette gorge 82, dans la position de montage, dans l'exemple décrit, le rebord périphérique surélevé 64 de la pièce intermédiaire 60 vient en regard de l'épaulement intérieur 58 du connecteur 18 et la jupe latérale 56 vient s'étendre au moins partiellement du côté intérieur du rebord périphérique 64 de la pièce intermédiaire 60.

Dans l'exemple illustré, la compression du joint d'environnement 80 est essentiellement radiale. En variante, la compression du joint d'environnement peut comporter également une composante axiale entre les deux parois latérales de la gorge 82.

Dans le mode de réalisation préféré de l'invention, la pièce intermédiaire 60 est montée en force à l'intérieur de la base 16. A cet effet et pour augmenter la pression de contact du montage en force, la pièce intermédiaire 60 comprend sur la paroi externe périphérique de son rebord surélevé au moins une nervure 68 apte à coopérer par friction avec la surface interne périphérique 261 de la base 16 lors de son assemblage.

Dans une variante non illustrée sur les figures, la pièce intermédiaire 60 peut être venue de matière avec la base 16 à condition bien entendu que la base 16 soit réalisée dans une matière le permettant telle qu'une matière plastique ou un alliage d'aluminium. Bien entendu, dans ce cas, seul le relief de la face supérieure de la pièce intermédiaire est conservé afin de conserver les fonctions d'emboîtement et de positionnement de l'élément de détection et la face inférieure est venue de matière avec la base. Ceci présente l'avantage de réduire le nombre de composants du dispositif 10 et de simplifier le procédé d'assemblage.

La pièce intermédiaire 60 est réalisée de préférence en matière plastique, par exemple dans un matériau thermoplastique. Ceci permet d'assurer une excellente isolation électrique et donc une protection optimale du circuit imprimé aux décharges électrostatiques. Par exemple, le matériau plastique peut comporter l'un ou plusieurs des composés suivants : des polyamides (de type PA6, PA6.6, PA4.6, etc.) et leurs déclinaisons haute température (PPA), des polyimides (PAI, PEI), du polybutylène téréphtalate (PBT), des phenylènes (PPE, PPS), du polysulphone (PSU), des technopolymères (PEEK, PAEK), des thermodurcissables (Polyester insaturés UP, Bakelite). Le matériau peut être chargé ou non par exemple avec des fibres de verre, des fibres de carbone, des billes de verre, des nanocharges. Ceci permet notamment d'adapter les caractéristiques à chaque application (résistance haute température, stabilité dimensionnelle, conductivité thermique et/ou isolation électrique).

Cette pièce 60 peut être avantageusement réalisée de façon très simple par exemple par injection avec un moule à simple fermeture.

Le matériau de la pièce intermédiaire 60 peut comprendre en outre un ou plusieurs additifs ayant des propriétés d'amélioration de la conductivité thermique de la pièce qui ainsi permettent d'augmenter la précision et le temps de réponse en température du capteur tout en gardant les mêmes performances en terme d'isolation électrique.

Dans un autre mode de réalisation de l'invention illustré par **la** **figure 11****,** la pièce intermédiaire 60 comprend un prolongement axial en forme de doigt de gant 90 pour loger une sonde de température. De préférence, le doigt de gant 90 s'étend en bordure de l'espace intérieur 62 de réception de l'élément de détection 12. Ceci permet de déporter la sonde de température de l'élément de détection 12 et ainsi notamment d'augmenter la sensibilité aux variations thermiques du fluide. Dans ce cas, on préférera le recours à une sonde de température filaire au lieu d'une sonde de température embarquée directement sur le circuit imprimé PCB ou sur la céramique. De façon connue en soi, les pattes de la sonde s'étendent à l'intérieur du doigt de gant 90 et l'extrémité sensible des pattes de la sonde est alors plongée à l'intérieur du doigt de gant. La précision et le temps de réponse de la mesure de température sont alors améliorés.

La sonde de température comprend par exemple une sonde CTN (sigle pour Coefficient de Température Négatif). En variante, la sonde peut être également une sonde de type PT100. Une telle sonde est constituée d'un filament de platine entourant une tige de verre ou non dont la caractéristique est de changer de résistance en fonction de la température. Afin d'améliorer encore les performances de la sonde de température, le doigt de gant pourra être rempli d'une pâte thermique pour conduire plus efficacement la chaleur du fluide vers la partie sensible de la sonde de température.

Bien que cela ne soit pas illustré par les figures, on comprendra que dans le cas d'une pièce intermédiaire muni d'un doigt de gant, la chambre de mesure présente un orifice plus grand de sorte que le doigt de gant puisse être logé à l'intérieur.

On va maintenant décrire les principaux aspects de fonctionnement l'invention en référence notamment aux **figures 1 à 10****.**

Au préalable, au cours d'une étape non illustrée, les différents composants du dispositif 10 sont fabriqués. La fabrication des composants est relativement simple et peut être réalisée par moulage par injection ou encore par usinage en fonction des matériaux utilisés ou selon encore d'autres procédés de fabrication. Par exemple, pour fabriquer le corps de connecteur, on moule une matière plastique. Ce moulage est prévu pour former d'un seul tenant la paroi du fond, la jupe et les reliefs d'emboîtement.

La pièce 60 est au cours d'une première étape d'assemblage montée à l'intérieur de la base 16 afin d'obtenir l'ensemble illustré sur **la** **figure 7****.** Au préalable, le joint 32 d'étanchéité au fluide est placé au fond de la cavité 22.

Lors du montage de la pièce 60 à l'intérieur de la base 16, les nervures 68 assurent un centrage de la pièce 60 par rapport à la base 16 et son immobilisation à l'intérieur de la cavité 22 grâce à un montage en force. Lors du montage, il est nécessaire d'assurer que la pièce 60 vienne en butée avec la zone surélevée du fond 24 de la cavité 22. Ceci permet de garantir ultérieurement une compression optimale du joint d'environnement 80. De façon simple, ces assemblages ne nécessitent pas de prévoir une orientation spécifique.

Puis, au cours d'une deuxième étape d'assemblage, l'élément 12 est positionné dans la pièce intermédiaire 60 comme cela est représenté en **figure 6****.** Grâce éventuellement au profil de détrompage, l'élément 12 ne peut être positionné que dans une seule position relativement à la pièce intermédiaire 60.

Au cours d'une troisième étape d'assemblage illustré sur **la** **figure 10****,** le joint d'environnement 80 peut être positionné sur le rebord surélevé 64 de la pièce intermédiaire 60 déjà montée dans la base 16, sans nécessiter de déformation préalable de ce joint. Eventuellement, en variante, le joint d'environnement peut être positionné autour de la jupe latérale 56 du connecteur 18 en butée contre l'épaulement 58.

Le connecteur 18 et la base 16 munie du joint d'environnement 80 et de la pièce intermédiaire 60 sont montés ensemble de façon à ce que la pièce 60 vienne coopérer par emboîtement avec le connecteur 18 grâce aux organes d'emboîtement 70. En variante, la pièce 60 plutôt que d'être montée au préalable dans la base 16 pourra être montée directement avec le connecteur 18, l'ensemble de la pièce 60 et du connecteur 18 étant alors par la suite monté en force à l'intérieur de la base 16.

Lors de l'emboîtement du connecteur 18 et de la pièce 60, le joint d'environnement 80 est comprimé de façon progressive radialement entre la paroi interne de la base 16 et la jupe latérale 56 du connecteur 18 assurant ainsi une étanchéité optimale du logement interne 20 du corps de boîtier 14. Eventuellement peut se produire également une compression axiale entre le rebord 64 de la pièce 60 et l'épaulement 58 du connecteur 18 lors de l'emboîtement.

Ensuite, une dernière étape de sertissage du bord d'extrémité 27 de la base 16 sur le connecteur 18 vient compléter cet assemblage et permet d'obtenir le dispositif 10 représenté à **la** **figure 1****.**

Ce dispositif tel que présenté ci-dessus présente de nombreux avantages, notamment une grande robustesse, une simplicité de réalisation et des performances complémentaires d'isolation électrique et de résistance aux décharges électrostatiques. Les géométries spécifiques complémentaires du connecteur 18 et de la pièce 60 permettent de façon simple d'assurer le détrompage de son positionnement tout en participant à l'étanchéité du dispositif.

L'invention ne se limite pas aux modes de réalisation précédemment décrits. En particulier, on pourra exploiter un dispositif 10 avec d'autres moyens d'emboîtements que ceux décrits ci-dessus.

D'autres modes de réalisation à la portée de l'homme du métier peuvent aussi être envisagés sans sortir du cadre de l'invention définie par les revendications ci-après.

## Revendications

1. Dispositif (10) de mesure d'un paramètre physique d'un fluide, en particulier un fluide d'un circuit d'un véhicule automobile, du type comprenant :
- un corps (14) de boîtier comprenant un corps (16) de base et un corps (18) de connecteur pour le raccordement électrique du dispositif (10) avec un circuit électrique externe, les corps de connecteur (18) et de base (16) étant assemblés pour délimiter ensemble un logement intérieur (20) au corps de boîtier (14),
- un élément (12) de détection du paramètre physique délimitant une première face (12A) de mesure du paramètre et une deuxième face (12B) de connexion électrique avec le corps de connecteur (18),
- une pièce intermédiaire (60) de positionnement de l'élément de détection (12) comprenant un espace transversal (62) de réception de l'élément de détection (12) et étant configurée pour être entièrement logée à l'intérieur d'une cavité (22) du corps de base (16), et
- un joint d'environnement (80) agencé dans le dispositif (10) pour assurer une étanchéité du logement intérieur (20) vis-à-vis de l'environnement extérieur,
**caractérisé en ce que** la pièce intermédiaire (60) et le corps (18) de connecteur sont conformés pour coopérer par emboîtement afin d'assurer un positionnement relatif de la pièce (60) par rapport au corps de connecteur en délimitant ensemble une gorge périphérique extérieure (82) destinée à recevoir le joint d'environnement (80) **et en ce que** la gorge périphérique (82) présente une section transversale en forme de U ouvert radialement vers l'extérieur et est fermée par le corps de base (16) en position d'assemblage de telle sorte que le joint d'environnement (80) est comprimé radialement à l'intérieur de la gorge (82).

2. Dispositif (10) selon l'une quelconque des revendications précédentes, dans lequel le corps de connecteur (18) et la pièce intermédiaire (60) comprennent des organes (70) d'emboîtement de forme complémentaire formés, sur des faces en regard de la pièce intermédiaire (60) et du corps de connecteur (18), par une succession de parties en saillie et en creux décalés par rapport à ceux de la face placée en regard.

3. Dispositif (10) selon la revendication précédente, dans lequel les organes d'emboîtement (70) de la pièce intermédiaire (60) sont disposés autour de l'espace de réception (62) de l'élément de détection (12).

4. Dispositif (10) selon l'une quelconque des revendications précédentes, dans lequel le corps de connecteur (18) comprend une paroi frontale (54) d'obturation du corps de base (16) et une jupe latérale périphérique (56) s'étendant depuis une face interne de la paroi frontale (54) en formant un épaulement intérieur (58) avec la paroi (54), la jupe (56) et l'épaulement (58) délimitant respectivement un fond et une paroi latérale de la gorge (82).

5. Dispositif (10) selon l'une quelconque des revendications précédentes, dans lequel la pièce intermédiaire (60) a une forme générale de plaque munie d'un rebord périphérique surélevé (64) par rapport au plan de la plaque, ce bord périphérique (64) délimite une portion centrale (66) à l'intérieur de laquelle s'étend l'espace transversal de réception (62).

6. Dispositif (10) selon les revendications 4 et 5 prises ensemble, dans lequel, dans la position emboîtée, le rebord périphérique surélevé (64) de la pièce intermédiaire (60) présente une face d'extrémité qui est destinée à s'étendre en vis-à-vis de l'épaulement intérieur (58) et qui délimite une autre paroi latérale de la gorge (82).

7. Dispositif (10) selon la revendication précédente, dans lequel la jupe latérale (56) est dimensionnée pour s'appuyer au moins partiellement contre une face intérieure du rebord périphérique (64) de la pièce intermédiaire (60) en position d'assemblage du dispositif.

8. Dispositif (10) selon l'une quelconque des revendications 5 à 7, dans lequel l'élément de détection (12) comprend un support en forme de plaquette, l'épaisseur de la portion centrale (66) de la pièce intermédiaire (60) correspond sensiblement à l'épaisseur de la plaquette.

9. Dispositif (10) selon l'une quelconque des revendications précédentes, dans lequel le corps de connecteur (18) comprend un embout (52) de raccordement électrique s'étendant axialement en saillie.

10. Dispositif (10) selon l'une quelconque des revendications précédentes, dans lequel la pièce intermédiaire (60) est montée en force à l'intérieur du corps de base (16) ou est venue de matière avec le corps de base (16).

11. Dispositif (10) selon la revendication précédente, dans lequel la pièce intermédiaire (60) comprend sur une paroi externe périphérique de son rebord surélevé (64) au moins une nervure (68) apte à coopérer par friction avec une paroi interne latérale (26l) du corps de base (16) pour créer le montage en force à l'intérieur du corps de base (16).

12. Dispositif (10) selon l'une quelconque des revendications précédentes, dans lequel le corps de base (16) est muni d'une paroi latérale périphérique (26) venant retenir le corps de connecteur (18) par sertissage d'un bord d'extrémité (27) de la paroi latérale (26) sur le pourtour extérieur du corps de connecteur (18).

13. Dispositif (10) selon l'une quelconque des revendications précédentes, dans lequel l'élément de détection (12) a une forme générale rectangulaire, carrée ou cylindrique.

14. Dispositif (10) selon l'une quelconque des revendications précédentes, dans lequel la pièce intermédiaire (60) est réalisée dans un matériau thermoplastique.

15. Dispositif (10) selon l'une quelconque des revendications précédentes, dans lequel la pièce intermédiaire (60) comprend en outre un prolongement axial en forme de doigt de gant pour loger une sonde de température.
